Europäisches Patentamt

European Patent Office

Office européen des brevets

(11) Veröffentlichungsnummer: **0 274 090**
**B1**

# EUROPÄISCHE PATENTSCHRIFT

(45) Veröffentlichungstag der Patentschrift:
09.05.90

(51) Int. Cl.⁵: **F16J 15/16**, F16J 15/34,
F27B 7/24

(21) Anmeldenummer: 87118512.0

(22) Anmeldetag: 14.12.87

(54) Dichtung.

(30) Priorität: 23.12.86 DE 3644330

(43) Veröffentlichungstag der Anmeldung:
13.07.88 Patentblatt 88/28

(45) Bekanntmachung des Hinweises auf die Patenterteilung:
09.05.90 Patentblatt 90/19

(84) Benannte Vertragsstaaten:
AT BE CH DE ES FR GB IT LI NL SE

(56) Entgegenhaltungen:
DE-A- 3 320 767
FR-A- 2 501 844
US-A- 2 265 953
US-A- 2 281 157
US-A- 2 509 912
US-A- 2 672 357

(73) Patentinhaber: Feodor Burgmann Dichtungswerke
GmbH & Co., Äussere Sauerlacher Strasse 6-8,
D-8190 Wolfratshausen 1(DE)

(72) Erfinder: Stalter, Winfried, Dachauer Strasse 21,
D 8066 Bergkirchen(DE)
Erfinder: Rehmann, Manfred, Rosenweg 45,
D-8192 Geretsried(DE)

(74) Vertreter: Empl, Karl et al, Patentanwälte Dipl.-Ing. K.
Empl Dipl.-Ing., Dipl.-Wirtsch.-Ing. K. Fehners
Schumannstrasse 2, D-8000 München 80(DE)

# Beschreibung

Die Erfindung betrifft eine Dichtung zwischen einem ersten Bauteil und einem zweiten Bauteil, welche Bauteile relativ zueinander eine Dreh- oder Schwenkbewegung um eine Drehachse ausführen, enthaltend eine am ersten Bauteil abdichtend, axial unverschieblich und drehfest angeordnete, radial nach außen vorstehende Ringscheibe, welche auf jeder ihrer axialen Stirnseiten eine ringförmige, in einer zur Drehachse lotrechten Ebene gelegene Gleitbahn aufweist, ein am zweiten Bauteil axial verschieblich und drehfest gehaltenes, mit diesem Bauteil durch einen Kompensator abdichtend verbundenes Gehäuse, welches im wesentlichen U-förmigen Querschnitt aufweist, radial nach innen offen ist und aus zwei Gehäuseteilen besteht, die im Bereich eines einen radialen Abstand zur äusseren Umfangsfläche der Ringscheibe einhaltenden zentralen Abschnitts unbeweglich und abdichtend miteinander verbunden sind und von diesem ausgehend radial nach innen vorstehende Seitenwände bilden, die die Gleitbahnen der Ringscheiben unter Belassung eines Spiels umgreifen, wobei in jeder der zur Ringscheibe im wesentlichen parallelen Innenfläche der Seitenwände eine Ringnut ausgebildet ist, welche koaxial zur Drehachse angeordnet ist und im wesentlichen zylindrisch geformte radial äußere und innere Begrenzungsflächen aufweist und in jeder Ringnut ein Dichtungsring aus einem elastischen nachgiebigen Dichtungswerkstoff mit einem Teil seiner axialen Länge in Richtung zur Drehachse verschieblich und drehfest gelagert ist und mit einem weiteren Teil seiner axialen Länge über die Innenfläche der Seitenwand vorsteht und mit seiner Gleitfläche an der Gleitbahn anliegt und in der Ringnut ein Trägerring in Richtung der Drehachse verschieblich gelagert ist, an dessen einer Seite die von der Gleitfläche abgewandte Bodenfläche des Dichtungsringes anliegt und an dessen anderer Seite eine Mehrzahl von Federn anliegt, die sich an einem von der Seitenwand getragenen Bauteil abstützen und die Dichtungsringe an die Gleitbahnen anpressen.

Bei einer bekannten Dichtung der vorstehend beschriebenen Art (FR-A 2 501 844) ist in jeder der beiden Seitenwände des Gehäuses nur eine Ringnut ausgebildet. In jeder der im Querschnitt quadratischen Ringnuten ist ein Trägerring angeordnet, der ebenfalls im Prinzip quadratische Querschnittsform aufweist und dessen axiale Länge im wesentlichen gleich der in Axialrichtung gemessenen Nuttiefe ist. Der Trägerring ist in der Ringnut nach Art eines Ringkolbens in seiner Axialrichtung verschieblich und abdichtend gelagert und enthält in seiner der Ringscheibe zugewandten Stirnseite eine ringförmige, im Querschnitt quadratische Aufnahmenut. Diese Aufnahmenut nimmt den aus elastisch nachgiebigen Dichtungswerkstoff bestehenden, im Querschnitt rechteckigen Dichtungsring mit dem größten Teil seiner axialen Länge auf und haltert ihn unbeweglich.

An der Außenfläche jeder Seitenwand des Gehäuses sind vier Federtöpfe unter gleichen Winkelabständen angeordnet, deren zylindrische Kammern Längsachsen besitzen, die parallel zur Drehachse der Dichtung und mittig zwischen der radial äußeren und inneren Begrenzungsfläche der Trägerring aufnehmenden Ringnut verlaufen. Jede Federtopf-Kammer ist mit dem Grund der Ringnut durch eine in der Längsachse geführte und die Seitenwand durchdringende Bohrung verbunden, durch welche sich eine Stange erstreckt, welche die Kraft einer in der Kammer angeordneten Schraubendruckfeder auf den Trägerring überträgt und dadurch dessen Dichtungsring zur Anlage an der Gleitbahn der Ringscheibe bringt.

Um eine verkantungssichere Führung des Trägerrings in der Ringnut zu gewährleisten und um eine trotz der von den Stangen bedingten Krafteinleitung an nur vier Punkten eine einigermaßen gleichmäßige Flächenpressung des an der Gleitbahn anliegenden Dichtungsrings zu erhalten, ist es erforderlich, den Trägerring steif auszubilden und ferner durch ein relativ großes Spiel zwischen den radial äusseren und inneren Begrenzungswänden der Ringnut und den zylindrischen äußeren bzw. inneren Umfangsflächen des Trägerrings dessen axiale Beweglichkeit im Hinblick auf seine unvermeidbare restliche Deformation zu sorgen. Dieses Spiel ist auch notwendig, damit der Dichtungsring und somit auch der Trägerring neben Axialverschiebungen der Ringscheibe, die relativ zum Gehäuse erfolgen, auch in begrenztem Umfang Taumelbewegung dieser Ringscheibe aufnehmen kann. Andererseits wird durch dieses Spiel zwangsweise auch ein Leckageweg für das abzudichtende Medium eröffnet.

Als Nachteil ist ferner zu werten, daß sich der Trägerring aufgrund seiner Steifigkeit nicht an temperaturbedingte wellige Verwerfungen der Ringscheibe, d.h. Abweichungen der Gleitbahnen von einer ebenen Fläche, anpassen kann und diese Verwerfungen voll durch die nur begrenzte Elastizität des Dichtungsrings aufgenommen werden müssen, mit der Folge unterschiedlicher Flächenpressungen und einer Leckage im Dichtspaltbereich, daß in dem abzudichtenden Medium enthaltene Feststoffteilchen die Beweglichkeit des Trägerrings in der Ringnut behindern können und daß nur ein relativ kurzer Abschnitt der axialen Länge des Dichtungsrings für den Verschleiß zur Verfügung steht.

Aufgabe der Erfindung ist es, eine Dichtung zu schaffen, die bei hohen Temperaturen einsetzbar ist und eine zuverlässige Abdichtung von zwei Bauteilen auch dann gestattet, wenn diese große Abmessungen aufweisen und während des Betriebs große und wechselnde axiale, radiale und winkelige Versetzungen zwischen den Bauteilen erfahren und/oder wenn die Gleitbahnen aufgrund von Wellungen der Ringscheibe nicht mehr völlig eben sind.

Diese Aufgabe wird erfindungsgemäß dadurch gelöst, daß in jeder Innenfläche einer Seitenwand wenigstens zwei konzentrisch zueinander angeordnete Ringnuten ausgebildet sind, in denen Dichtungsringe angeordnet sind, daß die Dichtungsringe abdichtend an radial äußeren und inneren Begrenzungsflächen der Ringnuten anliegen und daß der Trägerring elastisch verbiegbar ausgebildet ist.

Abgesehen von der größeren Sicherheit gegen Leckage, welche die Anordnung mehrerer Dichtungsringe bringt, wird durch diese erfindungsgemäße Ausbildung erreicht, daß der Trägerring mit dem ihm zugeordneten Dichtungsring praktisch allen Formänderungen der Ringscheibe und damit der auf ihm ausgebildeten Gleitbahnen folgen kann, daß der überwiegende Teil der axialen Länge jedes Dichtungsringes zur Kompensation eines Verschleisses bereit steht und daß durch die unmittelbare Anlage der Dichtungsringe an den äußeren und inneren Ringnut-Begrenzungsflächen eine leckagesichere Abdichtung erreicht wird. Vorteilhaft ist ferner, daß diese radial äußere und innere Abdichtung in ihrer axialen Beweglichkeit weniger durch Feststoffteilchen im abzudichtenden Medium blockiert werden kann und den axial dahinter liegenden elastischen Trägerring vor dem Zutritt von Feststoffteilchen bewahrt, so daß dieser ebenfalls axial beweglich bleibt.

Weitere Merkmale und Vorteile der Erfindung ergeben sich aus den Unteransprüchen und der folgenden Beschreibung von Ausführungsbeispielen der Erfindung anhand der Zeichnungen in denen zeigt:

Fig. 1 einen Längsschnitt durch den oberen Teil einer ersten Ausführungsform der Dichtung und

Fig. 2 einen Längsschnitt durch den oberen Teil einer zweiten Ausführungsform der Dichtung.

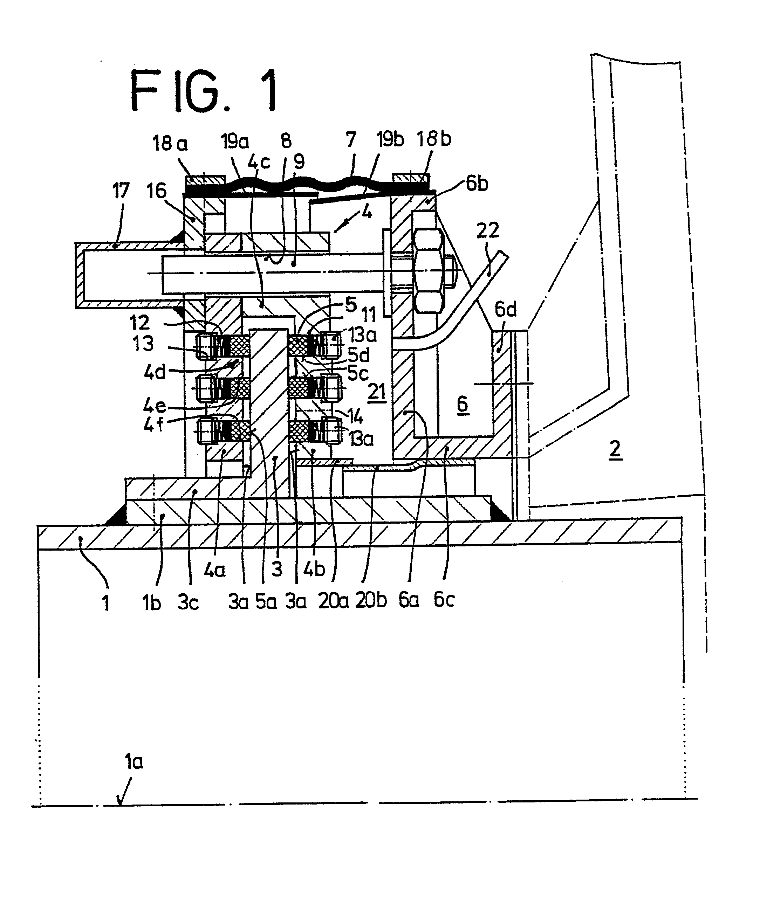

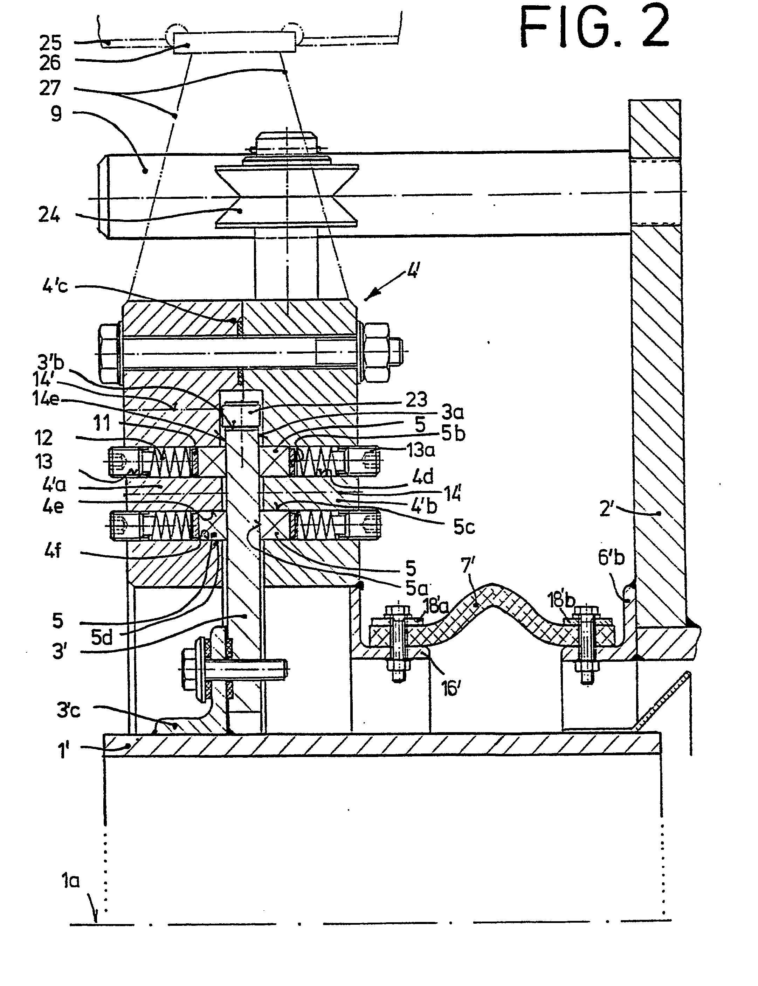

Die in Fig. 1 veranschaulichte Dichtung (wie auch diejenige gemäß Fig. 2) ist dazu bestimmt, ein durch das Drehrohr eines Drehrohrofens gebildetes, um seine Drehachse (Längsachse) 1a umlaufendes, erstes Bauteil 1 gegenüber ein durch einen Brennerkopf gebildetes stationäres zweites Bauteil abzudichten.

Die Dichtung besteht im wesentlichen aus einer am ersten Bauteil 1 befestigten Ringscheibe 3, einem Gehäuse 4, welches insgesamt sechs mit der Ringscheibe zusammenwirkende Dichtungsringe 5 haltert, einem an zweiten Bauteil 2 unbeweglich befestigten Zwischenträger 6, einem das Gehäuse 4 gegen den Zwischenträger abdichtenden Kompensator 7 und einer Führung, mit welcher das Gehäuse drehfest, aber in Richtung der Drehachse 1a verschieblich am Zwischenträger gehalten ist und welche gebildet ist durch mehrere Führungsbohrungen 8 des Gehäuses, in die jeweils am Zwischenträger 6 und damit am zweiten Bauteil 2 feste Bolzen 9 eingreifen, deren Achsen parallel zur Drehachse 1a verlaufen.

Die Ringscheibe 3 weist auf ihren beiden axialen Stirnseiten für die Dichtungsringe 5 bestimmte Gleitbahnen 3a auf, welche in zur Drehachse 1a lotrechten Ebenen liegen. Die Ringscheibe 3 setzt sich radial innen mit einem Rohrabschnitt 3c fort, der mit (nicht dargestellten) Schrauben am Außenumfang einer Verstärkungsbandage 1b befestigt ist, welche ihrerseits am Außenumfang des ersten Bauteils 1 durch Schweissung befestigt ist. Die Ringscheibe 3 ist zur Erleichterung des Einbaus durch gestuft geformte Trennfugen geteilt, welche wenigstens näherungsweise in die Drehachse 1a enthaltenden Ebenen gelegen sind und wird erst an der Einbaustelle mit (nicht dargestellten Schrauben) zu einer Einheit zusammengefügt.

Das gehäuse 4 ist als ein im Querschnitt U-förmiger Ring ausgebildet und umschließt mit Spiel die Ringscheibe 3. Das Gehäuse besteht aus zwei Seitenwänden 4a, 4b, welche von einem zentralen Abschnitt 4c ausgehen. Jede Seitenwand 4a, 4b enthält in ihrer Innenfläche drei konzentrisch zur Drehachse 1a angeordnete Ringnuten 4d, welche in Richtung der Drehachse 1a, d.h. jeweils zu den Gleitbahnen 3a der Ringscheibe offen sind. Vom Boden der Ringnuten 4d verlaufen bis zu den Außenflächen der Seitenwände Bohrungen 13, welche auf ihren diesen Außenflächen benachbarten Abschnitten mit Innengewinden versehen sind. Das Gehäuse ist sowohl in einer ersten Trennfuge geteilt, welche in einer zur Drehachse 1a lotrechten Ebene liegt und durch den zentralen Abschnitt 4a geführt ist, als auch in zweiten Trennfugen geteilt (in der Zeichnung nicht sichtbar), welche in die Drehachse 1a enthaltenden Ebenen liegen, wobei, um den Einbau zu erleichtern, wenigstens die durch die zweite Trennfuge gebildeten Gehäuseteile erst am Einbauort durch Verschraubung oder Verschweißung dichtend miteiander verbunden werden.

Die Dichtungsringe 5 sind im Querschnitt rechteckig und bestehen aus einem elastisch nachgiebigen Dichtungswerkstoff, vorteilhaft geformten, endlos geschlossenen Strängen aus faserartigem Dichtungsmaterial. Jeder Dichtungsring 5 ist so in eine Ringnut 4d eingesetzt, daß er mit einem Teil seiner axialen Länge über die Innenfläche der Seitenwand 4a, 4b vorsteht und mit seiner Gleitfläche 5a an der Gleitbahn 3a der Ringscheibe 3 anliegt. Der andere Teil jedes Dichtungsrings liegt mit seiner radial äußeren und radial inneren Umfangsfläche 5c, 5d an dem radial äußeren bzw. inneren Begrenzungsflächen 4e, 4f dichtend, jedoch in Richtung der Drehachse 1a verschieblich an.

Vor dem Einbau der Dichtungsringe 5 wird ein Trägerring 11 in jede Ringnut 4d eingelegt, der ein zumindest geringes Spiel zu den radial äußeren und inneren Begrenzungsflächen 4e, 4f aufweist. Der Trägerring 11 ist durch die Wahl seines Werkstofes und durch seine Querschnittsform so ausgelegt, daß er sich an langgezogene Verwerfungen der Ringscheibe (d. h. solchen, deren Wellenlänge größer als der Abstand zwischen zwei Federn 12 ist) elastisch anpassen kann, aber andererseits eine so große Steifigkeit besitzt, daß unter Berücksichtigung der Elastizität des Dichtungsringes 5 dessen Gleitfläche 5a auch an einer mittig zwischen zwei Federn gelegenen Stelle mit einer Flächenpressung von wenigstens 0,1 N/mm an die Gleitbahn 3a angepreßt wird.

Von Boden der Ringnuten 4d ausgehende Bohrungen 13 nehmen jeweils als Schraubenfedern ausgebildete Federn 12 auf, die sich einerseits gegen den Trägerring 11 und andererseits gegen Druckschrauben 13a abstützen und den Dichtungsringen 5 eine Vorspannung in richtung auf die Gleitbahnen 3a der Ringscheibe 3 erteilen. Durch die Einschraubtiefe der Schrauben 13a ist die Anpreßkraft einstellbar.

Wenigstens zwischen zwei bezüglich der Leckagerichtung benachbarten Ringnuten 4d einer Seitenwand 4a, 4b ist eine Zufuhrbohrung 14 geführt, durch die ein Schmiermittel oder ein Sperrmedium dem durch diese beiden Dichtungsringe begrenztem Ringraum zugeführt werden kann.

Das Gehäuse 4 ist seinem zentralen Abschnitt 4c von einer Mehrzahl von Führungsbohrungen 8 durchdrungen, welche gleichförmig um den Umfang verteilt sind. An der Seitenwand 4a ist mit (nicht dargestellten) Schrauben ein als Winkelring ausgebildeter Ringkörper 16 befestigt, dessen radial äußere zylindrische Umfangsfläche einen größeren Durchmesser als des Gehäuse 4 aufweist. Der Ringkörper 16 ist im Bereich der Führungsbohrungen 8 mit den Durchtritt des Bolzens 9 zulassenden Öffnungen versehen, welche mit angeschweißten zylindrischen Kappen 17 verschlossen sind.

Der am zweiten Bauteil 2 befestigte Zwischenträger 6 enthält einen dem Gehäuse 4 zugewandten ringscheibenförmigen Steg 6a, der sich an seinen radial äußeren und inneren Rändern in entgegengesetzt zum Gehäuse 4 vorstehenden ringförmigen Ansätzen 6b bzw. 6c fortsetzt. Der letztgenannte Ansatz setzt sich weiderum in einem weiteren ringscheibenförmigen Steg 6d fort, der mittels (nicht dargestellter) Schrauben unter Zwischenlage einer Dichtungsscheibe am zweiten Bauteil 2 befestigt ist. Der Steg 6a weist mit den Fürungsbohrungen 8 fluchtende Bohrungen auf, in welche die einen Enden der Bolzen 9 mit ihrem Gewindeende eingesetzt und mittels am Bolzen fester Bunde und Muttern befestigt sind. Die anderen, zylindrisch ausgebildeten Enden der Bolzen 9 stehen in die Führungsbohrungen 8 ein, wodurch das Gehäuse 4 in Bezug auf den Zwischenträger 6 und damit auf des Zweite Bauteil 2 eine Verschiebebewegung in Richtung der Drehachse 1a ausführen kann, jedoch an einer Drehung gehindert ist.

Der Kompensator 7 ist auf den äußeren zylindrischen Umfangsflächen einerseits des Ringkörpers 16 und andererseits der Ansatzes 6b mittels Bandagen 18a, 18b gehalten. Unmittelbar unter dem Kompensator 7 angeordnet und zusammen mit diesem eingespannt, befindet sich eine erste Hilfsdichtung, welche aus zwei dünnwandigen Rohrabschnitten 19a, 19b besteht, die nahezu gleiche Durchmesser aufweisen und die sich mit ihren von den Einspannstellen abgewandten freien Enden überlappen. Eine zweite Hilfsdichtung von im Prinzip gleicher Konstruktion mit Rohrabschnitten 20a, 20b ist an dem radial innen liegenden Umfang der Seitenwand 4b bzw. am ringförmigen Ansatz 6c des Zwischenträgers 6 befestigt. Die sich überlappenden Enden der Hilfsdichtungen können gleitend aufeinander liegen oder zwischen sich einen minimalen Spalt bilden. Von den beiden Hilfsdichtungen wird eine Ringkammer 21 umgrenzt, welche über eine Leitung 22 mit einem Sperrmedium beschickt werden kann, das vorzugsweise einen geringen Überdruck gegenüber dem von der Dichtung abzudichtenden Medium aufweist.

In der eine zweite Ausführungsform der Erfindung veranschaulichenden Fig. 2 sind Bauteile, welche in gleicher Weise wie in der ersten Ausführungsform ausgebildet sind oder welche die gleiche Funktion ausüben, mit den selben Bezugzeichen (ggf. ergänzt durch einen Index- Strich) bezeichnet. Zu ihrer Erläuterung ist die vorhergehende Beschreibung ergänzend heranzuziehen.

Die Ringscheibe 3' ist mit Schrauben unter Zwischenfügung eines Dichtungsringes an einem Winkelring 3' c befestigt, der seinerseits am ersten Bauteil 1' angeschweißt ist. Um die äußere Umfangsfläche 3'b der Ringscheibe sind in gleichen Abständen mehrere Führungsrollen 23 angeordnet, deren Drehachsen durch die Drehachse 1a des ersten Bauteils 1' gehen und lotrecht zu letzterer Drehachse stehen. Die Führungsrollen haben einen Durchmesser, der größer als die axiale Dicke der Ringscheibe 3' ist, der aber etwas kleiner ist als der Abstand zwischen den Innenflächen der Seitenwände 3'a, 3'b. Die Führungsrollen 23 bewirken, daß das Gehäuse 4' axialen und winkeligen Bewegungen der Ringscheibe 3' folgt, so daß die Dichtungsringe 5 von der Aufnahme solcher Führungskräfte freigehalten sind und durch Axialbewegungen innerhalb ihrer Ringnuten 4d nur kleinere Wellungen der Ringscheibe ausgleichen müssen bzw. sich aufgrund eines Verschleisses nachstellen. Durch das Spiel zwischen den Fürhungsrollen 23 und den Innenflächen der Seitenwände ist sichergestellt, daß die Ringscheibe 3' nicht im Gehäuse 4' klemmt, wenn sie während des Betriebes eine Verwerfung erfährt, d. h. uneben wird.

An der dem zweiten Bauteil 2' benachbarten Seitenwand 4'b ist am radial inneren Umfang ein als Winkelring ausgebildeter Ringkörper 16' angeschweißt. Am zweiten Bauteil 2' ist ein ebenfalls durch einen Winkelring gebildeter Ansatz 6'b angeschweißt. Auf im Durchmesser gleichen äußeren Umfangsflächen des Ringkörpers 16' und des Ansatzes 6'b sind die beiden Enden des Kompensators 7' mit Bandagen 18'a, 18'b und Schrauben befestigt. Durch diese Ausbildung sind alle Schrauben 13a ohne Abnahme des Kompensators 7' für eine Einstellung der Anpreßkraft der Federn 12 auch während des Betriebs zugänglich.

Von dem ortsfest ausgebildeten zweiten Bauteil 2' stehen zwei Bolzen 9 über den Aussenumfang des zentralen Abschnitts 4'c vor. An der bezogen auf die Drehrichtung des ersten Bauteils 1' vorne gelegenen Fläche jedes Bolzens 9 liegt eine Laufrolle 24 an, welche auf einem Zapfen drehbar und um eine geringe Wegstrecke in der Achsrichtung des Zapfens verschieblich gelagert ist, der am Gehäuse 4' befestigt ist. Die Achsen der Zapfen liegen in einer gemeinsamen, von der Drehachse 1a lotrecht durchdrungenen Ebene. Ferner liegt jede Achse in einer zur Drehachse 1a parallelen Ebene, welche vorzugsweise zur Drehachse einen Abstand aufweist, der angenähert dem halben Durchmesser der Laufrolle entspricht (d. h. die in Fig. 2 dargestellten Laufrollen und ihre Zapfen befinden sich über der Zeichnungsebene).

Oberhalb des Gehäuses 4' ist ein ortsfestes, d. h. fest mit dem zweiten Bauteil 2' verbundenes Traggerüst 25 vorgesehen, das eine zur Drehachse 1a parallele Führung aufweist, auf welcher ein Schlitten 26 verschieblich ist, an dem über ein Gehänge 27 das Gehäuse 4' aufgehängt ist. Das Gehäuse 4' ist durch die erläutete Anordnung und Ausbildung der Element 9 und 24 bis 27 an einer Drehung bezüglich des zweiten Bauteils 2' gehindert, kann aber praktisch unbehindert Axialbewegungen und Taumelbewegungen der Ringscheibe 3' folgen.

## Patentansprüche

1. Dichtung zwischen einem ersten Bauteil (1; 1') und einem zweiten Bauteil (2; 2'), welche Bauteile relativ zueinander eine Dreh oder Schwenkbewegung um eine Drehachse (1a) ausführen, enthaltend
eine am ersten Bauteil (1; 1') abdichtend, axial unverschieblich und drehfest angeordnete, radial nach außen vorstehende Ringscheibe (3; 3'), welche auf jeder ihrer axialen Stirnseiten eine ringförmige, in einer zur Drehachse (1a) lotrechten Ebene gelegene Gleitbahn (3a) aufweist,
ein am zweiten Bauteil (2; 2') axial verschieblich und drehfest gehaltenes, mit diesem Bauteil durch einen Kompensator (7; 7') abdichtend verbundenes Gehäuse (4; 4'), welches im wesentlichen U-förmigen Querschnitt aufweist, radial nach innen offen ist und aus zwei Gehäuseteilen besteht, die im Bereich eines einen radialen Abstand zur äusseren Umfangsfläche (3b) der Ringscheibe (3; 3') einhaltenden zentralen Abschnitts (4c; 4'c) unbeweglich und abdichtend miteinander verbunden sind und von diesem ausgehend radial nach innen vorstehende Seitenwände (4a, 4b; 4'a, 4'b) bilden, die die Gleitbahnen (3a) der Ringscheibe unter Belassung eines Spiels umgreifen, wobei in jeder der zur Ringscheibe (3; 3') im wesentlichen parallelen Innenfläche der Seitenwände (4a, 4b; 4'a, 41b) eine Ringnut (4d) ausgebildet ist, welche koaxial zur Drehachse (1a) angeordnet ist und im wesentlichen zylindrisch geformte radial äußere und innere Begrenzungsflächen (4e, 4f) aufweist und
in jeder Ringnut (4d) ein Dichtungsring (5) aus einem elastischen nachgiebigen Dichtungswerkstoff mit einem Teil seiner axialen Länge in Richtung zur Drehachse (1a) verschieblich und drehfest gelagert ist und mit einem weiteren Teil seiner axialen Länge über die Innenfläche der Seitenwand (4a, 4b; 4'a, 4'b) vorsteht und mit seiner Gleitfläche (5a) an der Gleitbahn (3a) anliegt und
in der Ringnut (4d) ein Trägerring (11) in Richtung der Drehachse (1a) verschieblich gelagert ist, an dessen einer Seite die von der Gleitfläche (5a) abgewandte Bodenfläche (5b) des Dichtungsringes (5) anliegt und an dessen anderer Seite eine Mehrzahl von Federn (12) anliegt, die sich an einem von der Seitenwand (4a, 4b; 4'a, 4'b) getragenen Bauteil abstützen und die Dichtungsringe (5) an die Gleitbahnen (3a) anpressen, dadurch gekennzeichnet,
daß in jeder Innenfläche einer Seitenwand (4a, 4b; 4'a, 4'b) wenigstens zwei konzentrisch zueinander angeordnete Ringnuten (4d) ausgebildet sind, in denen Dichtungsringe (5) angeordnet sind,
daß die Dichtungsringe (5) abdichtend an radial äusseren und inneren Begrenzungsflächen (4a, 4b) der Ringnuten (4d) anliegen und
daß der Trägerring (11) elastisch verbiegbar ausgebildet ist.

2. Dichtung nach Anspruch 1, dadurch gekennzeichnet, daß sich die Bohrungen (13), welche in gleichen Abständen zueinander angeordnet sind und welche die als Schraubenfedern ausgebildeten Federn (12) aufnehmen, von den Böden der Ringnuten (4d) zu den Aussenseiten der Seitenwände (4a, 4b; 4'a, 4'b) des Gehäuses (4; 4') erstrecken und daß wenigstens die den Außenseiten benachbarten Längenabschnitte der Bohrungen (13) mit Innengewinden ausgebildet sind, die Druckschrauben (13a) aufnehmen, durch deren Einschraubtiefe die von den Federn (12) auf die Trägerringe (11) und der Dichtungsring (5) ausgeübten Druckkräfte einstellbar sind.

3. Dichtung nach Anspruch 1, dadurch gekennzeichnet, daß die Dichtungsringe (5) durch geformte Stränge faserartigen Dichtungsmaterials gebildet sind und im wesentlichen rechteckige Querschnittsform aufweisen.

4. Dichtung nach Anspruch 1, dadurch gekennzeichnet, daß der Trägerring (11) hinsichtlich seiner Querschnittsform und des Elastizitätsmoduls seines Werkstoffes so ausgebildet ist, daß bei vorgegebenen Werten für die Elastizität des Werkstoffes des Dichtungsringes (5) sowie für dessen axiale Länge und für den Abstand sowie für die Druckkraft der Federn (12) an keiner Stelle der Gleitfläche (5a) des Dichtungsringes eine minimale Flächenpressung von $0,1 \text{ N/mm}^2$ unterschritten wird.

5. Dichtung nach Anspruch 1, dadurch gekennzeichnet, daß nahe der äusseren Umfangsfläche (3b) der Ringscheibe (3') eine Mehrzahl von Führungsrollen (23) in untereinander gleichen Abständen angeordnet ist, deren Laufachse jeweils lotrecht zur Drehachse (1a) in der axialen Mitte zwischen den Gleitbahnen (3a) verlaufen und deren Durchmesser um einen geringen Betrag kleiner als der Abstand zwischen den Innenflächen der Seitenwand (4'a) des Gehäuses (4') ist.

6. Dichtung nach Anspruch 1, dadurch gekennzeichnet, daß das Gehäuse (4; 4'), die Ringscheibe (3; 3') und der Trägerring (11) in Umfangsrichtung geteilt ausgebildet sind und am Einbauort durch Schweißung oder Verschraubung zu vollständigen Körpern vereinigt werden.

7. Dichtung nach Anspruch 1, **dadurch gekennzeichnet,** daß am zweiten Bauteil (2; 2') mindestens ein Bolzen (9) mit einer zur Drehachse (1a) parallelen Führungsfläche befestigt ist und daß auf dieser Führungsfläche ein vom Gehäuse (4; 4') getragenes Führungsglied verschieblich ist.

8. Dichtung nach Anspruch 7, **dadurch gekennzeichnet,** daß das Führungsglied durch eine Führungsbohrung (8) gebildet ist, welches das die Seitenwände (4a, 4b) des Gehäuses (4) verbindende zentrale Teil (4c) durchdringt und die als zylindrische Gleitfläche ausgebildete Führungsfläche des Bolzens (9) mit geringem Radialspiel umgibt und daß die Führungsbohrung an ihrem dem freien Ende des Bolzens benachbarten Austrittsende durch eine zylindrische Kappe (17) abgedeckt ist.

9. Dichtung nach Anspruch 7, **dadurch gekennzeichnet,** daß das Führungsglied durch eine Laufrolle (24) mit einer am Gehäuse (4') festen Achse gebildet ist.

10. Dichtung nach Anspruch 1, **dadurch gekennzeichnet,** daß das zweite Bauteil (2') ortsfest ausgebildet ist, daß über dem Gehäuse (4') ein ortsfestes Traggerüst (25) angeordnet ist, auf dem parallel zur Drehachse (1a) ein Schlitten (26) verschieblich ist und daß das Gehäuse über ein Gehänge (27) vom Schlitten getragen ist.

11. Dichtung nach Anspruch 1, **dadurch gekennzeichnet,** daß der Kompensator (7) einen größeren Durchmesser als das Gehäuse (4) aufweist, mit seinem einen Ende an einer Umfangsfläche eines radial über das Gehäuse vorstehenden und daran abdichtend befestigten Ringkörpers (16) befestigt ist und mit seinem anderen Ende an einem ringförmigen Ansatz (6b) des zweiten Bauteils befestigt ist.

12. Dichtung nach Anspruch 1, **dadurch gekennzeichnet,** daß am Gehäuse (4') ein Ringkörper (16') abdichtend befestigt ist, welcher eine Umfangsfläche aufweist, deren Durchmesser kleiner als derjenige der den kleinsten Durchmesser aufweisende Ringnut (4d) ist und daß der Kompensator (7') mit seinem einen Ende an dieser Umfangsfläche und mit seinem anderen Ende an einem ringförmigen Ansatz (6'b) des zweiten Bauteils (2') befestigt ist.

13. Dichtung nach Anspruch 1, **dadurch gekennzeichnet,** daß sie eine Hilfsdichtung enthält, welche innerhalb des Kompensators (7) und zu diesem unmittelbar benachbart angeordnet ist und welche aus zwei dünnwandigen, nahezu gleiche Durchmesser aufweisenden Rohrabschnitten (19a, 19b) besteht, von denen der erste Rohrabschnitt (19a) an seinem Ende an einem dichtend am Gehäuse (4) befestigten Ringkörper (16) und der zweite Rohrabschnitt (19b) an seinem einen Ende an einem dichtend am zweiten Bauteil (2) befestigten Zwischenträger (6c) befestigt ist, wobei sich die anderen Enden der Rohrabschnitte überlappen.

14. Dichtung nach Anspruch 1, **dadurch gekennzeichnet,** daß sie eine Hilfsdichtung enthält, welche aus zwei dünnwandigen, nahezu gleiche Durchmesser aufweisenden Rohrabschnitten (20a, 20b) besteht, von denen der erste Abschnitt (20a) an seinem einen Ende an der dem zweiten Bauteil (2) nächstliegenden Seitenwand (4b) und der zweite Rohrabschnitt (20b) an seinem einen Ende an einem dichtend am zweiten Bauteil befestigten Zwischenträger (6c) befestigt, wobei sich die anderen Enden der Rohrabschnitte überlappen.

15. Dichtung nach den Ansprüchen 13 und 14, **dadurch gekennzeichnet,** daß in die von beiden Hilfsdichtungen (19a, 19b; 20a, 20b) begrenzte Ringkammer (21) eine Leitung (22) zur Zuführung eines Sperrmediums einmündet.

16. Dichtung nach Anspruch 1, **dadurch gekennzeichnet,** daß durch das Gehäuse (4; 4') mindestens eine Zufuhrbohrung (14, 14') geführt ist, wobei jede Zufuhrbohrung in einen Ringraum mündet, der von zwei hinsichtlich der Leckagerichtung des Abzudichtenden Mediums aufeinanderfolgenden Dichtungsringen (5) begrenzt ist.

## Revendications

1. Joint d'étanchéité placé entre un premier élément de construction (1; 1') et un deuxième élément de construction (2; 2'), lesquels éléments de construction effectuant, l'un par rapport à l'autre, un mouvement de rotation ou de pivotement autour d'un axe de rotation (1a), ledit joint contenant un disque annulaire (3; 3') faisant saillie radialement, disposé de manière à le rendre étanche sur le premier élément de construction (1; 1') non mobile axialement et résistant aux rotations, disque annulaire qui présente sur chacun de ses côtés frontaux axiaux une glissière (3a) de forme annulaire placée dans un plan perpendiculaire à son axe de rotation (1a),

un carter (4; 4') monté sur le deuxième élément de construction (2; 2') de manière mobile axialement et resistant aux rotations de cet élément de construction auquel il est relié par un compensateur (7; 7') de manière à le rendre étanche, lequel carter (4; 4') présentant une section sensiblement en forme de U, est ouvert radialement vers l'intérieur et est constitué de deux parties de carter qui sont reliées l'une à l'autre de manière étanche et f'ixe dans la zone d'une section centrale (4c; 4'c) située à une distance radiale de la surface périphérique extérieure (3b) du disque annulaire (3; 3') les deux parties de carter formant des parois latérales (4a, 4b; 4'a, 4'b) faisant saillie vers l'intérieur et partant radialement de ladite section centrale (4c; 4'c), les parois latérales (4a, 4b; 4'a, 4'b) entourant les glissières (3a) du disque annulaire en laissant un certain jeu, une rainure annulaire (4d) étant pratiquée dans chaque face intérieure des parois latérales (4a, 4b; 4'a, 4'b) sensiblement paralléle au disque annulaire (3; 3'), ladite rainure annulaire étant disposée coaxialement à l'axe de rotation (1a) et présentant des surfaces limites radialement extérieure et intérieure (4e; 4f) de forme sensiblement cylindrique et

dans chaque rainure annulaire (4d) une bague d'étanchéité (5) en un matériau d'étanchéité élastique étant placée de manière à pouvoir se déplacer par une partie de sa longueur axiale en direction de l'axe de rotation (1a) mais sans pouvoir tourner et faisant saillie au-delà de la face intérieure de la paroi latérale (4a, 4b; 4'a, 4'b) par une autre partie de sa longueur axiale et s'appliquant par sa surface lisse (5a) sur la glissière (3a) et

dans la rainure annulaire (4d) une bague-support (11) étant montée de manière mobile en direction de l'axe de rotation (1a), bague-support (11) sur un côté de laquelle prend appui le fond (5b) de la bague d'étanchéité (5) non orientée vers la surface lissse (5a) et sur l'autre côté de laquelle s'appliquent plusieurs ressorts (12) lesquels prennent appui sur un élément de construction supporté par la paroi latérale (4a, 4b; 4'a, 4'b) et qui comprime les bagues d'étanchéité (5) sur les glissières (3a), caractérisé par le fait que dans chaque face intérieure d'une paroi latérale (4a, 4b; 4'a, 4'b) sont pratiquées au moins deux rainures annulaires (4d) disposées concentriquement l'une par rapport à l'autre dans lesquelles sont disposées des bagues d'étanchéité (5), par le fait que les bagues d'étanchéité (5) s'appliquent de manière étanche à des surfaces limites (4a; 4b) radialement extérieure et intérieure des rainures annulaires (4d) et

par le fait que la bague-support (11) est réalisée de manière élastiquement déformable.

2. Joint d'étanchéité selon la revendication 1, caractérisé par le fait que les perçages (13) qui sont disposés de manière équidistante et qui reçoivent les ressorts (12) réalisés sous forme de ressorts hélicoïdaux s'étendent entre les fonds des rainures annulaires (4d) et les côtés extérieurs des parois latérales (4a, 4b; 4'a, 4'b) du carter (4; 4') et que au moins les sections longitudinales des perçages (13) placés au voisinage des côtés extérieurs sont munis de filetages intérieurs qui reçoivent les vis de compression (13a) grâce à la profondeur de pénétration desquelles vis on règle les forces de compression exercées par les ressorts (12) sur les bagues-supports (11) et la bague d'étanchéité (5).

3. Joint d'étanchéité selon la revendication 1, caractérisé par le fait que les bagues d'étanchéité (5) sont formées par des écheveaux en matériau d'étanchéité fibreux et présentent une section transversale sensiblement rectangulaire.

4. Joint d'étanchéité selon la revendication 1, caractérisé par le fait que la bague-support (11) est réalisée en ce qui concerne sa section transversale et le module d'élasticité de son matériau de base de telle manière que pour des valeurs prédéterminées de l'élasticité du matériau de construction de la bague d'étanchéité (5) ainsi que pour sa longueur axiale et la distance ainsi que la force de compression des ressorts (12), en aucun point de la surface lisse (5a) de la bague d'étanchéité la pression superficielle minimale soit inférieure à 0,1 N/mm².

5. Joint d'étanchéité selon la revendication 1, caractérisé par le fait qu'à proximité de la surface périphérique extérieure (3b) du disque annulaire (3') sont disposés de manière équidistante plusieurs galets de guidage (23) dont l'axe de rotation est respectivement perpendiculaire à l'axe de rotation la au centre axial entre les glissières (3a) et que leur diamètre est légèrement inférieur à la distance entre les faces intérieures de la paroi latérale (4'a) du carter (4').

6. Joint d'étanchéité selon la revendication 1, caractérisé par le fait que le carter (4; 4'), le disque annulaire (3; 3') et la bague-support (11) sont réalisés de manière distincte dans la direction périphérique et sont réunis pour constituer des corps complets sur le site du montage par soudure ou par vissage.

7. Joint d'étanchéité selon la revendication 1, caractérisé par le fait que sur le deuxième élément de construction (2; 2') est fixée au moins une tige (9) comportant une face de guidage parallèle à l'axe de rotation (1a) et que sur cette face de guidage est monté de manière mobile un élément de guidage supporté par le carter (4; 4').

8. Joint d'étanchéité selon la revendication 7, caractérisé par le fait que l'élément de guidage est formé par un perçage 8 qui traverse la partiê centrale (4c) reliant les parois latérales (4a, 4b) du carter (4) et qui entoure, avec un faible jeu radial, la face de guidage de la tige (9) réalisée sous forme de surface lisse cylindrique et que ledit perçage de guidage est recouvert par une calotte cylindrique (17) sur son extrémité de sortie placée au, voisinage de l'extrémité libre de la tige.

9. Joint d'étanchéité selon la revendication 7, caractérisé par le fait que l'élément de guidage est constitué d'une roulette (24) dont l'axe est fixé sur le carter (4').

10. Joint d'étanchéité selon la revendication 1, caractérisé par le fait que le deuxième élément de construction (2') est réalisé de manière fixe et immobile, qu'un échafaudage support (25) fixe et immobile est disposé au-dessus du carter (4'), échafaudage sur lequel un chariot (26) est mobile parallèlement à l'axe de rotation (1a) et que le carter est supporté par le chariot par l'intermédiaire d'une suspension (27).

11. Joint d'étanchéité selon la revendication 1, caractérisé par le fait que le compensateur (7) présente un diamètre plus grand que le carter (4), qu'il est fixé par l'une de ses extrémités à une surface périphérique d'un corps annulaire (16) faisant saillie radialement au-dessus du carter et fixé de manière étanche sur celui-ci et par son autre extrémité sur un talon (6b) de forme annulaire du deuxième élément de construction.

12. Joint d'étanchéité selon la revendication 1, caractérisé par le fait que sur le carter (4') est fixé de manière étanche un corps annulaire (16') qui présente une surface périphérique dont le diamètre est inférieur à celle des rainures annulaires (4d) présentant le diamètre le plus réduit et que le compensateur (7') est fixé par une de ses extrémités sur cette surface périphérique et par l'autre de ses extrémités sur un talon de forme annulaire (6'b) du deuxième élément de construction (2').

13. Joint d'étanchéité selon la revendication 1, caractérisé par le fait qu'il contient un joint auxiliaire lequel est disposé à l'intérieur du compensateur (7) et au voisinage immédiat de celui-ci et qui est constitué de deux sections tubulaires (19a, 19b) à parois misnces et de diamètres sensiblement identiques dont la première section tubulaire (19a) est fixée sur son extrémité à un corps annulaire (16) fixé de manière étanche sur le carter (4) et la deuxième section tubulaire (19a) étant fixée sur l'une de ses extrémités sur un support intermédiaire (6c) fixé lui-même de manière étanche sur le deuxième élément de construction (2), les autres extrémités des sections tubulaires se chevauchant mutuellement.

14. Joint d'étanchéité selon la revendication 1, caractérisé par le fait qu'il contient un joint auxiliaire qui est constitué de deux sections tubulaires (20a, 20b) à parois minces de diamètres sensiblement identiques dont la première section (20a) est fixée par l'une de ses extrémités sur la paroi latérale (4b) la plus proche du deuxième élément de construction (2) et la deuxième section tubulaire (20b) est fixée par l'une de ses extrémités sur un support intermédiaire (6c) fixé lui-même de manière étanche sur le deuxième élément de construction, les autres extrémités des sections tubulaires se chevauchant mutuellement.

15. Joint d'étanchéité selon les revendications 13 et 14, caractérisé par le fait que dans la chambre annulaire (21) délimitée par les deux joints auxiliaires (19a, 19b; 20a, 20b) débouche une conduite (22) d'alimentation d'un fluide.

16. Joint d'étanchéité selon la revendication 1, caractérisé par le fait qu'à travers le carter (4; 4') passe au moins perçage d'alimentation (14, 14') chaque passage débouchant dans une chambre annulaire qui est délimitée par deux bagues d'étanchéité (5) qui se suivent vues dans le sens des fuites éventuelles du fluide à étancher.

## Claims

1. A seal between a first part (1; 1') and a second part (2; 2'), which parts perform a rotational or swivel movement relative to each other about an axis of rotation (1a), comprising an annular disk (3; 3') which is arranged in a sealing manner on the first part (1; 1'), is axially non-displaceable and rotationally fixed and projects radially outwards and which has a circular slide path (3a) lying in a plane perpendicular to the axis of rotation (1a) on each of its axial end faces, and a housing (4; 4') which is held axially displaceable and rotationally fixed on the second part (2; 2') and is connected to this part in a sealing manner by a compensator (7; 7') and which has a substantially U-shaped cross section, opens radially inwards and is composed of two housing parts which are connected to each other in a sealing manner in the region of a central section (4c; 4'c), which maintain a radial distance from the outer circumferential surface (3b) of the annular disk (3; 3') and, starting from the said central section (4c; 4'c), form side walls (4a, 4b; 4'a, 4'b) projecting radially inwards which surround the slide paths (3a) of the annular disk while leaving a clearance, an annular groove (4d) being formed in each of the inside surfaces of the side walls (4a, 4b; 4'a, 4'b), which inside surfaces are substantially parallel to the annular disk (3; 3'), which annular groove (4d) is arranged coaxial to the axis of rotation (1a) and has radially outer and inner limiting surfaces (4e, 4f) of substantially cylindrical form and, in each annular groove (4d), a sealing ring (5) made of resilient elastic sealing material is mounted fixedly in terms of rotation and, with a part of its axial length, displaceably in the direction of the axis of rotation (1a), and projects with another part of its axial length over to the inside surface of the side wall (4a, 4b; 4'a, 4'b) and rests on the slide path (3a) with its slide surface (5a) and, in the annular groove (4b), a bearing ring (11) is mounted displaceably in the direction of the axis of rotation (1a), on the one side of which bearing ring (11) the bottom surface (5b) of the sealing ring (5) facing away from the slide surface (5a) rests, and on the other side of which a plurality of springs (12) rests, which are supported on a part carried by the side wall (4a, 4b; 4'a, 4'b) and press; the sealing rings (5) against the slide paths (3a), characterized in that at least two annular grooves (4d), which are arranged concentrically to each other, are formed in each inside surface of a side wall (4a, 4b; 4'a, 4'b), in which sealing rings (5) are arranged, in that the sealing rings (5) rest in a sealing manner on radially outer and inner limiting surfaces (4a, 4b) of the annular grooves (4d), and in that the bearing ring (11) is constructed to be resiliently deformable.

2. A seal according to claim 1, characterized in that the bore-holes (13), which are arranged at equal distances to one another and which receive the springs (12) constructed as helical springs, extend from the bottoms of the annular grooves (4d) to the outsides of the side walls (4a, 4b; 4'a, 4'b) of the housing (4; 4') and in that at least the longitudinal sections of the bore-holes (13), adjacent to the outsides, are constructed with internal threads which receive the clamping nuts (13a), by means of the screwing depth of which the compressive forces exerted by the springs (12) on the; bearing rings (11) and the sealing ring (5) can be adjusted.

3. A seal according to claim 1, characterized in that the sealing rings (5) are formed of shaped cords of fibrous sealing material and have a substantially rectangular cross sectional shape.

4. A seal according to claim 1, characterized in that the bearing ring (11) is constructed in respect of its cross sectional shape and the modulus of elasticity of its material in such a way that with specified values for the elasticity of the material of the sealing ring (5) as well as for its axial length, and for the distance as well as for the compressive force of the springs (12) the surface pressure does not drop below a minimum of 0.1 N/mm² at any point of the slide surface (5a) of the sealing ring.

5. A seal according to claim 1, characterized in that, near to the outer circumferential surface (3b) of the annular disk (3'), a plurality of guide rollers (23) is arranged at equal distances from one another, the rolling axis of which runs in each case perpendicular to the axis of rotation (1a) in the axial centre between the sliding paths (3a) and the diameter of which is smaller, by a small amount, than the distance between the inside surfaces of the side wall (4'a) of the housing (4').

6. A seal according to claim 1, characterized in that the housing (4; 4'), the annular disk (3; 3') and the bearing (11) are constructed to be divided in the circumferential direction and are united to form complete bodies at the place of assembly by welding or screwing together.

7. A seal according to claim 1, characterized in that at least one bolt (9) is fastened to a guide surface parallel to the axis of rotation (1a) on the second part (2; 2'), and in that a guide member carried by the housing (4; 4') is displaceable on this guide surface.

8. A seal according to claim 7, characterized in that the guide member is formed by a guide bore hole (8) which guide member penetrates the central part (4c) connecting the side walls (4a, 4b) of the housing (4) and surrounds the guide surface, constructed as a cylindrical slide surface, of the bolt (9) with slight radial play, and in that the guide bore hole is covered by a cylindrical cap (17) at its exit end adjacent to the free end of the bolt.

9. A seal according to claim 7, characterized in that the guide member is formed by a roller (24) with an axle fixed to the housing (4').

10. A seal according to claim 1, characterized in that the second part (2') is constructed to be stationary, in that, above the housing (4'), a stationary support rack (25) is arranged on which a slide (26) is displaceable parallel to the axis of rotation (1a), and in that the housing is supported from the slide via a hanging attachment (27).

11. A seal according to claim 1, characterized in that the compensator (7) has a larger diameter than the housing (4), is fastened with its one end to a circumferential surface of an annular body (16), projecting radially over the housing and fastened in a sealing manner to the latter, and is fastened! with its other end to a circular shoulder (6b) of the second part.

12. A seal according to claim 1, characterized in that an annular body (16') is fastened in a sealing manner to the housing (4'), which annular body (16') has a circumferential surface, the diameter of which is smaller than that of the annular groove (4d) having the smallest diameter, and in that the compensator (7') is fastened with its one end to this circumferential surface and with its other end to a circular- shoulder (6'b) of the second part (2').

13. A seal according to claim 1, characterized in that it contains an auxiliary seal which is arranged inside and immediately adjacent to the compensator (7) and which comprises two thin-walled tube sections (19a, 19b), having almost the same diameters, of which the first tube section (19a) is fastened at its end to an annular body (16) fastened in a sealing manner to the housing (4) and the second tube section (19b) is fastened at its one end to an intermediate support (6c) fastened in a sealing manner to the second part (2), the other ends of the tube sections overlapping.

14. A seal according to claim 1, characterized in that it contains an auxiliary seal which is composed of two thin-walled tube sections (20a, 20b), having almost the same diameters, of which the first section (20a) is fastened at its one end to the side wall (4b), lying nearest to the second part (2), and the second tube section (20b) is fastened at its one end to an intermediate support (6c) fastened in a sealing manner to the second part, the other ends of the tube sections overlapping.

15. A seal according to claims 13 and 14, characterized in that a line (22) for entry of a sealing medium opens out into the annular chamber (21) limited by both auxiliary seals (19a, 19b; 20a, 20b).

16. A seal according to claim 1, characterized in that at least one entry bore hole (14, 14') is passed through the housing (4; 4'), each entry bore hole opening out into an annular space which is limited by two sealing rings (5) arranged successively in respect of the leakage direction of the medium to be sealed.

# FIG. 1

# FIG. 2